# EUROPEAN PATENT SPECIFICATION

(11) **EP 1 850 118 B1**
(45) Date of publication and mention of the grant of the patent: **24.09.2008**
(21) Application number: 06008421.7
(22) Date of filing: 24.04.2006
(51) Int. Cl.: G01N 21/88, G01N 21/94

(54) **Method for detecting metallic particles**
Verfahren zur Erkennung von Metallpartikeln
Méthode de détection des particules métalliques

(43) Date of publication of application: 31.10.2007
(73) Proprietor: SIEMENS AKTIENGESELLSCHAFT, 80333 München (DE)
(72) Inventor: Genise, Carla, 26100 Pisa (IT)

(56) References cited:
- WO-A-98/10271
- DATABASE WPI Week 200546 Derwent Publications Ltd., London, GB; AN 2005-452277 XP002405263 & JP 2005 181042 A (NIPPONDENSO CO LTD) 7 July 2005 (2005-07-07)
- DATABASE WPI Week 200546 Derwent Publications Ltd., London, GB; AN 2005-452276 XP002405264 & JP 2005 181041 A (NIPPONDENSO CO LTD) 7 July 2005 (2005-07-07)
- DATABASE WPI Week 200476 Derwent Publications Ltd., London, GB; AN 2004-771924 XP002405265 & JP 2004 317431 A (NIPPONDENSO CO LTD) 11 November 2004 (2004-11-11)
- DATABASE WPI Week 200476 Derwent Publications Ltd., London, GB; AN 2004-771921 XP002405266 & JP 2004 317422 A (NIPPONDENSO CO LTD) 11 November 2004 (2004-11-11)
- DATABASE WPI Week 200480 Derwent Publications Ltd., London, GB; AN 2004-807403 XP002405267 & JP 2004 317257 A (NIPPONDENSO CO LTD) 11 November 2004 (2004-11-11)

## Description

The invention relates to a method for detecting metallic particles. In particular in order to control or ensure the quality of a given product it may be necessary to determine the number of metallic particles being contained in the product. These particles may be of a very small size ranging, for example, in the range from a couple of hundred micrometers to a few micrometers. Such a detection of metallic particles is for example used in a quality control of manufactured fluid injectors, in particular fuel injectors. Small metallic particles within a fuel injector might result in damages to given parts of the fluid injector thereby deteriorating its performance. Even if no direct damages are made by the metallic particles the characteristic of the respective part, in particular the fluid injector may be changed by metallic particles. In particular metallic and non metallic particles have different properties and therefore may change the characteristic of the respective part in a different way, which makes a discrimination between metallic and non metallic particles important.

Database WPI Week 2005/46, Derwent Publications Ltd., London, GB; AN2005-452277 discloses a cleaning water added with an indicator such as bromothymal blue solution which changes its color with pHs, being supplied to an injector. A filter applied with an alkaline aqueous solution collects the foreign material contained in cleaning water passed through the injector. The foreign material is identified by a color difference of foreign material and filter.

Database WPI Week 2005/46, Derwent Publications Ltd., London, GB; AN2005-452276 discloses that a camera photographs a filter which collects foreign material at each stage. A recording unit stores data related to the detected foreign material collected by the filter. Another recording unit records reference value of foreign material mixed with the injector. A comparator compares detected and reference foreign material data to determine abnormality in processing procedure of foreign material mixed with the injector.

Database WPI Week 2004/76, Derwent Publications Ltd., London, GB: AN2004-771924 discloses that a regression curve is obtained using a prestored data set obtained from several sample images. A threshold value for detecting luminance of foreign material in the measurement image is calculated from the regression curve using specific formula. In this way foreign materials such as metal, plastic waste, polyacetone of pallet, waste textile paper and cutting powder in fuel injectors are inspected.

Database WPI Week 2004/76 Derwent Publications Ltd., London, GB: AN2004-771921 discloses a method involving illuminating a fuel injector by using an ultraviolet light source. A transmission image and the reflective image of the foreign material adhered to the fuel injector are obtained. The images are compared for discriminating a glossy metal, non-glossy metal and a non-metal adhered to the injector.

Database WPI Week 2004/80 Derwent Publications Ltd., London, GB: AN2004-807403 discloses a post-shrinkage and expansion processing being performed with respect to foreign material image which is digitized using respective threshold values, to acquire shrinkage of foreign material image and expansion metal foreign material image. The areas of overlap of shrinkage and expansion images are removed from shrinkage foreign material image to acquire a non-metallic foreign material image.

It is an object of the invention to provide a method for detecting metallic particles. The object is achieved by the features of the independent claim. Advantageous embodiments of the invention are given by the sub claims.

The invention is distinguished by a method for detecting metallic particles which comprises the provision of two sources of light, illuminating a disc on which various particles are located from two opposing sides. **The disc is a membrane with a porosity in the range of about 0.4 to 1 micron.** The disc is scanned for obtaining a digital optical image of the disc. The optical image is digitally processed for identifying particles on the disc. Points of bright illumination are digitally detected on the disc. It is determined which of the detected points of bright illumination are associated to identified particles and these are then determined as the metallic particles. In this respect the insight is used that metallic particles reflect light better than non-metallic particles and therefore typically at least one point of bright illumination is present when exposing the respective metallic particle with light. In this way, the metallic particles can, in a fairly simple way, be automatically detected. This is in particular advantageous, if some of the particles present on the disc are of non-metallic nature.

According to a preferred embodiment of the invention the disc is scanned for obtaining a grey-scale digital-optical image of the disc. This is especially suitable and needs less storage space than, for example, a color image.

According to a further preferred embodiment of the invention the particles on the disc are discriminated from the disc itself by comparing the digital-optical image with a given first grey-threshold. The given first grey-threshold is chosen appropriately and may be obtained in an experimental way. This enables a very simple discrimination of all the particles from the disc.

According to a further preferred embodiment of the invention points of bright illumination are detected by comparing the digital-optical image with a given second grey-threshold. This has-the advantage that it may be processed in a very simple way.

Exemplary embodiments of the invention are explained in the following with the aid of schematic drawings. These are as follows:
Figure 1, an arrangement for detecting metallic particles,
Figure 2, a top view of a disc and
Figure 3, a flowchart.

Elements of the same design or function that appear in different illustrations are identified with the same reference characters.

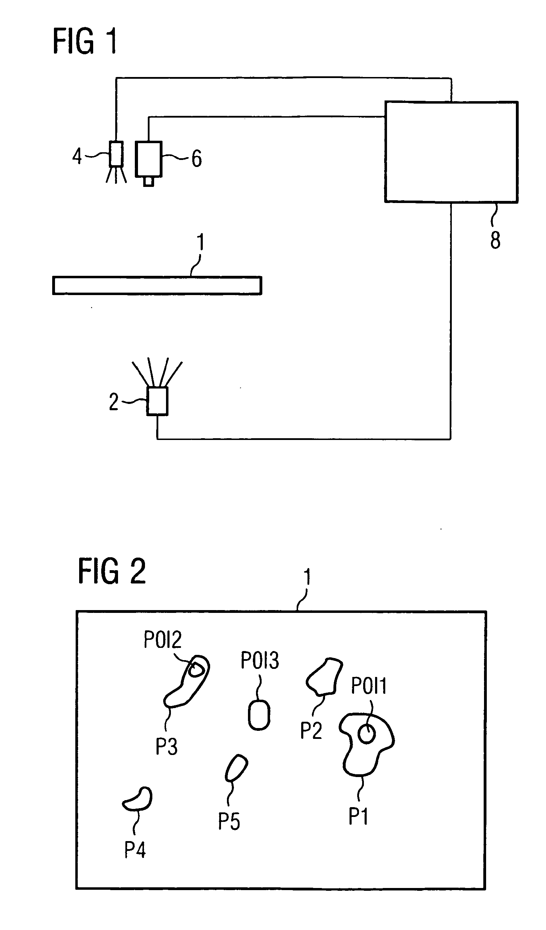

An arrangement for detecting metallic particles (Figure 1) comprises a disc 1, a first source of light 2, a second source of light 4, a digital camera 6 and a processing unit. The first and second sources of light 2 and 4 are located on two opposing sides of the disc 1. The disc 1 is formed such that it transmits a fair amount of the light emitted from the first source of light. The sources of light 2, 4 may create light of a transmitted and/or reflected and/or fluorescent type.

The disc is a membrane with a porosity in the range of 1 micron, most preferred of about 0.4 to 0.5 microns. The particles are typically greater than 5, microns. The particles may be obtained by flushing a given component, such as a fluid injector or part of the fluid injector, with a suitable solvent and using the membrane as a filter being permeable for the solvent and being non-permeable for the particles.

Figure 2 shows a top view of the disc 1 with various particles P1 to P5 located on the disc 1. Several points of bright illumination POI1 to POI3 are present on the disc 1. The points of bright illumination POI1, POI2 are located on a respective particle P1, P3, whereas the point of bright illumination POI3 is not located on a particle.

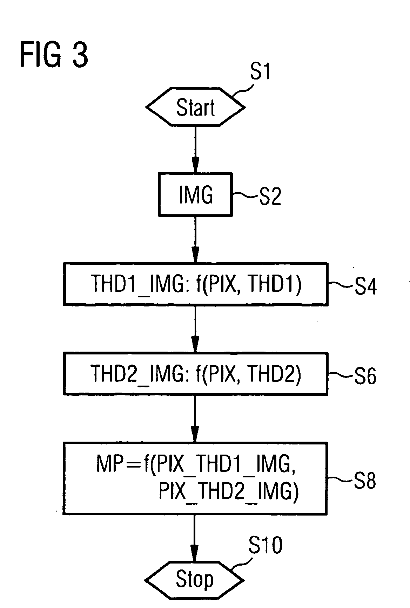

A program for detecting metallic particles is stored in a storage medium on the processing unit and is processed for detecting the metallic particles. The program is started in a step S1 (Figure 3) in which variables may be initialized.

In a step S2 an optical image IMG of the disc 1 is obtained by respectively controlling the digital camera 6. In a step S4 the pixels PIX of the digital-optical image IMG are compared to a first grey-threshold THD1. The digital-optical image IMG is preferably a grey-scale image with a given resolution for each pixel, for example an 8-bit resolution for each pixel PIX.

The first grey-threshold THD1 is chosen appropriately for discriminating the particles P1 - P5 from the disc 1 and may be obtained empirically. Preferably the surface of the disc 1 on being exposed to the two sources 2 and 4 has a lighter grey color than the particles in general and has a darker grey color than the points of bright illumination POI1 to POI3. In the step S4 a first processed digital image THD1_IMG is obtained by comparing the pixels PIX of the digital image IMG to the first grey-threshold THD1. Depending on whether the respective pixel PIX of the digital image IMG has a grey value greater than the first grey-threshold THD1 or not, a respective pixel PIX_THD1_IMG of the first processed digital image THD_IMG may have a value of 1 or respectively 0.

In a step S6 the pixels PIX of the digital image IMG are compared to a second grey-threshold THD2. Preferably the second grey-threshold THD2 is chosen in a way that it has a grey value which is representative of being darker than the grey value of the points of bright illumination POI1 - POI3. A second processed digital image THD2_IMG is obtained during step S6 by allocating to respective pixels PIX_THD_IMG of the second processed digital image THD_IMG a value of 1 or respectively of 0, dependent on whether the value of the respective pixel PIX of the digital image IMG is larger or smaller than the second grey-threshold THD2.

In a step S8 the metallic particles are identified by further processing the pixels PIX_THD1_IMG and PIX_THD2_IMG of the first and second processed digital images THD1_IMG, THD2_IMG. Preferalby it is determined whether the pixels PIX_THD2_IMG of the second processed digital image THD2_IMG with a value being representative for a point of bright illumination POI1 -POI3 are directly or indirectly surrounded by respective pixels PIX_THD1_IMG of the first processed digital image THD1_IMG having values being representative for a particle. If this is the case a respective metallic particle MP is identified.

After having processed the pixels PIX_THD1_IMG and PIX_THD2_IMG of the respective first and second processed digital images THD1_IMG and THD2_IMG respectively in step S8, the program is finished in a step S10.

## Claims

1. Method for detecting metallic particles (MP) **characterized in that it comprises**
- provision of two sources of light (2, 4),
- illuminating a disc (1) from two opposing sides on which various particles (P1 to P5) are located, **with the disc (1) being a membrane with a porosity in the range of about 0.4 to 1 micron,**
- scanning the disc (1) for obtaining a digital-optical image (IMG) of the disc (1),
- digitally processing the optical image (IMG) for identifying the particles (P1 to P5) on the disc (1),
- digitally detecting points of bright illumination (POI1 to POI3) on the disc (1),
- determining which of the detected points of bright illumination (POI1 to POI3) are associated to identified particles (P1 to P5) and determining the respective particles as metallic particles (MP).

2. A second method according to claim 1 **characterized by** scanning the disc (1) for obtaining a grey scale digital-optical image of the disc (1).

3. Method according to claim 2, comprising discriminating the particles (P1 to P5) on the disc (1) from the disc (1) by comparing the digital-optical image (IMG) with a given first grey-threshold (THD1).

4. Method according to one of the claims 2 or 3, comprising detecting the points of illumination (POI1 to POI3) by comparing the digital-optical image (IMG) with a given second grey-threshold (THD2).

## Patentansprüche

1. Verfahren zum Erkennen von Metallteilchen (MP), **dadurch gekennzeichnet, dass** es umfasst:
- Bereitstellen zweier Lichtquellen (2, 4),
- Beleuchten einer Scheibe (1), auf der sich verschiedene Teilchen (P1 bis P5) befinden, von zwei einander gegenüber liegenden Seiten, wobei die Scheibe (1) eine Membran mit einer Porosität im Bereich von etwa 0,4 bis 1 Mikrometer ist,
- Abtasten der Scheibe (1), um ein digitaloptisches Abbild (IMG) der Scheibe (1) zu erhalten,
- digitales Verarbeiten des optischen Abbilds IMG), um die Teilchen (P1 bis P5) auf der Scheibe (1) zu identifizieren,
- digitales Erkennen von Punkten heller Beleuchtung (POI1 bis POI3) auf der Scheibe (1),
- Bestimmen, welche der erkannten Punkte heller Beleuchtung (POI1 bis POI3) identifizierten Teilchen (P1 bis P5) zugeordnet werden, und Bestimmen der jeweiligen Teilchen als Metallteilchen (MP).

2. Zweites Verfahren nach Anspruch 1, **dadurch gekennzeichnet, dass** die Scheibe (1) abgetastet wird, um ein digitaloptisches Grauskalenabbild der Scheibe (1) zu erhalten.

3. Verfahren nach Anspruch 1, umfassend das Unterscheiden der Teilchen (P1 bis P5) auf der Scheibe (1) von der Scheibe (1) durch Vergleichen des digitaloptischen Abbilds (IMG) mit einer vorgegebenen ersten Grauschwelle (THD1).

4. Verfahren nach einem der Ansprüche 2 oder 3, umfassend das Erkennen der Beleuchtungspunkte (POI1 bis POI3) durch Vergleichen des digitaloptischen Abbilds (IMG) mit einer vorgegebenen zweiten Grauschwelle (THD1).

## Revendications

1. Procédé de détection de particules métalliques (MP) **caractérisé en ce qu'**il comprend
- le fait de prévoir deux sources de lumière (2, 4),
- le fait d'éclairer un disque (1) depuis deux côtés opposés sur lesquels différentes particules (P1 à P5) sont situées, avec le disque (1) étant une membrane ayant une porosité de l'ordre d'environ 0,4 à 1 micron,
- le fait de scanner le disque (1) afin d'obtenir une image optique numérique (IMG) du disque (1),
- le fait de traiter numériquement l'image optique (IMG) afin d'identifier les particules (P1 à P5) sur le disque (1),
- le fait de détecter numériquement des points d'éclairage lumineux (POI1 à POI3) sur le disque (1),
- le fait de déterminer lesquels des points d'éclairage lumineux détectés (POI1 à POI3) sont associés aux particules identifiées (P1 à P5) et de déterminer les particules respectives comme étant des particules métalliques (MP).

2. Second procédé selon la revendication 1, **caractérisé par** le fait de scanner le disque (1) afin d'obtenir une image optique numérique à niveaux de gris du disque (1).

3. Procédé selon la revendication 2, comprenant la discrimination entre les particules (P1 à P5) situées sur le disque (1) et le disque (1) en comparant l'image optique numérique (IMG) avec un premier seuil de gris donné (THD1).

4. Procédé selon l'une des revendications 2 ou 3, comprenant la détection des points d'éclairage (POI1 à POI3) en comparant l'image optique numérique (IMG) avec un second seuil de gris donné (THD2).
